# EUROPÄISCHE PATENTANMELDUNG

(11) **EP 1 537 771 A1**
(43) Veröffentlichungstag der Anmeldung: **08.06.2005**
(21) Anmeldenummer: 04105964.3
(22) Anmeldetag: 22.11.2004
(51) Int. Cl.: A01D 61/00

(54) **Querförderschnecke für einen Erntevorsatz**

(30) Priorität: 25.11.2003 DE 10354977
(71) Anmelder: Maschinenfabrik Kemper GmbH & Co. KG, 48973 Stadtlohn (DE)
(72) Erfinder: Rickert, Clemens, 48703, Stadtlohn (DE); Wolters, Norbert, 48712, Gescher (DE)
(74) Vertreter: Holst, Sönke, Dr.

(57) **Zusammenfassung**

Die Erfindung bezieht sich auf eine Querförderschnecke (10) für einen Erntevorsatz (24). Die Querförderschnecke (10) weist einen Körper (12) und um den Körper (12) angeordnete, spiralförmige Windungen (16, 18) auf, die sich jeweils von einer Außenseite des Körpers (12) zu seiner Mitte erstrecken. In der Mitte des Körpers (12) schließt sich an die Windungen (16, 18) eine etwa senkrecht zur Längsachse des Körpers (12) erstreckende Endscheibe (14) an.

Es wird vorgeschlagen, dass in der Mitte des Körpers (12) eine einzige Endscheibe (14) vorhanden ist, an deren beiden Seiten sich jeweils eine Windung (16, 18) anschließt.

## Beschreibung

Die Erfindung betrifft eine Querförderschnecke für einen Erntevorsatz, mit einem Körper, um den Körper angeordneten, spiralförmigen Windungen, die jeweils von einer Außenseite des Körpers in Richtung auf seine Mitte zu verlaufen und einer sich stromab der Windungen etwa senkrecht zur Längsachse des Körpers erstreckendenden Endscheibe.

Bei der Ernte von Pflanzen mit landwirtschaftlichen Erntemaschinen wird das Erntegut in der Regel zunächst vom Boden des Feldes aufgenommen (beispielsweise mit Zinken einer Pick-Up) oder abgeschnitten (z. B durch den Messerbalken eines Schneidwerks oder Mäh- und Einzugseinrichtungen eines Maisgebisses bzw. Einzug- und Pflückeinrichtungen eines Maispflückers). Die Pflanzen oder davon abgetrennte Fruchtstände, wie Maiskolben, werden dann in Querrichtung zusammengefördert und an den Einzugskanal oder Schrägförderer der Erntemaschine abgegeben. Die Querförderung erfolgt bei vielen Erntevorsätzen durch eine Querförderschnecke.

Eine derartige Querförderschnecke ist in der DE 38 04 598 A dargestellt. Sie ist aus einem kreiszylindrischen Rohr und um dessen Umfang angebrachten, spiralförmigen Windungen zur Förderung des Ernteguts aufgebaut. Im mittleren Bereich der Querförderschnecke, hinter dem der Einzugskanal des Feldhäckslers liegt, enden die von beiden Seiten einlaufenden spiralförmigen Windungen. An die Windungen schließen sich ringförmige Endscheiben an. Zwischen den Endscheiben befinden sich axial verlaufende, radial abstehende Förderplatten zur Förderung des Ernteguts nach hinten. Bei anderen Querförderschnecken (EP 0 861 583 A) verlaufen die spiralförmigen Windungen der Querförderschnecke bis zur Mitte und enden dort mit einer sich etwa radial erstreckenden Kante.

Die Querförderschnecken haben die Aufgabe, das Erntegut über die Breite des Einzugskanals möglichst gleichmäßig abzugeben, damit die Arbeitsorgane der Erntemaschine ebenfalls über ihre Breite betrachtet möglichst gleichmäßig beaufschlagt werden. Diese Gleichmäßigkeit ist beispielsweise bei konventionellen Mähdreschern mit Strohschüttlern wichtig, da relativ stark belastete Schüttler höhere Verluste produzieren als weniger stark belastete. Bei Ballenpressen ist ebenfalls eine über die Breite gleichmäßige Gutzufuhr wichtig, damit der Ballen in sich homogen ist.

Die Querförderschnecken mit Endscheiben und dazwischen angeordneten Förderplatten geben das von den Windungen herangeführte Gut zum größten Teil an den Endscheiben nach hinten ab, während die Förderplatten im Wesentlichen nur das im Bereich ihrer Breite einlaufende Gut nach hinten fördern. Der Einzugskanal der Erntemaschine ist somit in vielen Fällen außen stärker mit Erntegut beaufschlagt als innen. Bei Querförderschnecken mit durchgehenden Windungen wird das meiste Erntegut im mittleren Bereich abgegeben, so dass auch dort die Gutverteilung nicht homogen ist. Außerdem ergibt sich in manchen Fällen, beispielsweise bei Maispflückern, die im Lagermais betrieben werden und außer den Maiskolben auch viel Pflanzenmaterial einziehen, ein unerwünschter Gutstau, falls sich Pflanzen um die Endkante der Windungen legen oder wickeln.

Die der Erfindung zu Grunde liegende Aufgabe wird darin gesehen, eine Querförderschnecke bereitzustellen, bei der die genannten Probleme in geringerem Maße auftreten.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die erfindungsgemäße Querförderschnecke ist aus einem Körper und um den Körper gelegten Windungen aufgebaut. Von beiden Enden des Körpers verläuft jeweils mindestens eine Windung in Richtung zur Mitte des Körpers. Dort ist nur eine einzige Endscheibe angeordnet, die sich zumindest näherungsweise quer zur Längsachse des Körpers erstreckt. Die Endscheibe befindet sich somit in der Mitte vor dem Einzugskanal der Erntemaschine.

Auf diese Weise wird die Materialanhäufung in der Mitte des Einzugskanals der Erntemaschine vermieden, da das Erntegut an der linken und rechten Seite des Einzugskanals getrennt zugeführt wird. Das Erntegut sammelt sich seitlich der mittigen Endscheibe an, so dass beträchtliche Anteile des Ernteguts im Abstand von der Endscheibe an den Einzugskanal der Erntemaschine abgegeben werden. Die Beschickung der Erntemaschine wird dadurch verbessert. Außerdem verhindert die Endscheibe eine Materialanlagerung an den Enden der Windungen.

Die Endscheibe ist vorzugsweise ringförmig, obwohl es auch denkbar wäre, ihren Umfang in beliebiger anderer Weise zu gestalten. So könnte er von der Übergangsstelle zu den Windungen in der Drehrichtung kleiner oder größer werden oder wellenförmig gestaltet sein.

Die beiden von außen einlaufenden Windungen können jeweils an der Endscheibe enden bzw. mit ihr verbunden sein. Alternativ enden sie im Abstand von der Endscheibe, insbesondere in einer radial zum Körper verlaufenden oder sich kontinuierlich abflachenden Kante. Enden die Windungen im Abstand von der Endscheibe, besteht die Möglichkeit, in der Mitte des Körpers zwischen den Windungen und der Endscheibe einen von Windungen freien Bereich vorzusehen, oder hier axial verlaufende Bereiche der Windungen vorzusehen bzw. die Windungen in axial verlaufende Zwischenbleche übergehen zu lassen. Diese Bereiche erstrecken sich vorzugsweise radial zum Körper.

Die erfindungsgemäße Querförderschnecke eignet sich für alle Erntevorsätze und Erntemaschinen, bei denen Erntegut in einer Richtung zusammenzuführen ist. Beispiele sind Pick-Ups für Ballenpressen, Feldhäcksler und Ladewagen, Schneidwerke und Maispflücker für Mähdrescher und Maisgebisse für Feldhäcksler.

In den Zeichnungen sind zwei nachfolgend näher beschriebene Ausführungsbeispiele der Erfindung dargestellt. Es zeigt:
- Fig. 1: eine erste Ausführungsform einer erfindungsgemäßen Querförderschnecke,
- Fig. 2: einen mit der Querförderschnecke ausgestatteten Maispflücker, und
- Fig. 3: eine zweite Ausführungsform einer Querförderschnecke.

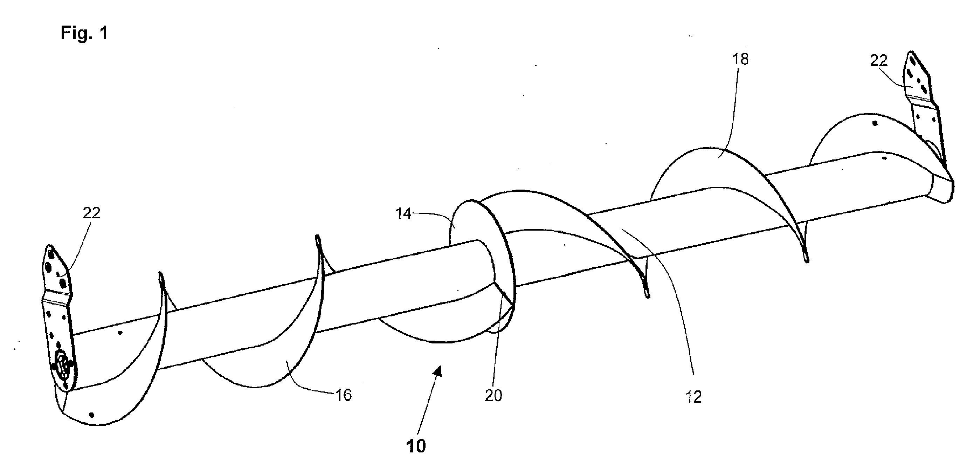

Die in Figur 1 zeichnerisch dargestellte Querförderschnecke 10 setzt sich aus einem kreiszylindrischen, rohrförmigen Körper 12, einer mittigen, sich orthogonal zur Längsachse des Körpers 12 erstreckenden, ringförmigen Endscheibe 14 und zwei spiralförmigen Windungen 16, 18 zusammen. Die Windungen 16, 18 erstrecken sich jeweils wendelförmig von einem äußeren Ende der Querförderschnecke 10 bis zur Endscheibe 14 in der Mitte des Körpers 12. Die Windungen 16, 18 schließen jeweils in einer sich etwa radial zum Körper 12 erstreckenden Kante 20 an die Endscheibe 14 an und sind dort mit einer durchgehenden Schweißnaht befestigt. Der äußere Durchmesser der Windungen 16 ist über die Länge des Körpers 12 konstant und stimmt mit dem äußeren Durchmesser der Endscheibe 14 überein. An den Enden des Körpers 12 sind Halterungen 22 zur Befestigung der Querförderschnecke 10 am Rahmen eines Erntevorsatzes vorgesehen.

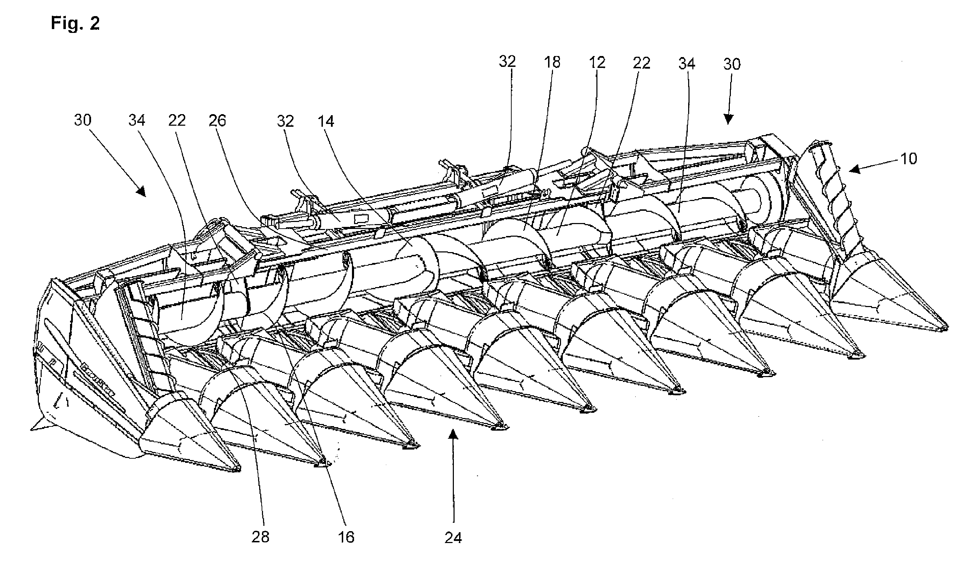

Die Figur 2 zeigt einen Erntevorsatz 24 in Form eines Maispflückers mit einer erfindungsgemäßen Querförderschnecke 10. Der Erntevorsatz 24 weist einen Rahmen 26 auf, über dessen Vorderfront acht Einzugs- und Pflückeinrichtungen 28 verteilt sind. Die Einzugs- und Pflückeinrichtungen 28 trennen im Erntebetrieb die Fruchtstände (Kolben) von den Pflanzen, deren Stängel zerhäckselt und auf dem Feld abgelegt werden. Die Kolben werden durch die um ihre Längsachse in Rotation versetzte Querförderschnecke 10 erfasst und zur Mitte des Erntevorsatzes 24 gefördert, an deren Rückseite der Schrägförderer eines Mähdreschers angeordnet ist. An beiden Seiten des Erntevorsatzes 24 sind Seitenteile 30 vorgesehen, die durch Hydraulikzylinder 32 zum Transport nach oben schwenkbar sind. Die Seitenteile 30 sind mit Querförderschneckenabschnitten 34 ausgestattet, die sich in der dargestellten Arbeitsstellung an die Querförderschnecke 12 anschließen und zwecks Antrieb drehmomentschlüssig mit ihr verbunden sind.

Die erfindungsgemäße Querförderschnecke 10 mit der mittigen Endscheibe 14, an deren beiden Seiten sich die Wicklungen 16, 18 anschließen, bewirkt, dass nicht der größte Teil des Ernteguts in der Mitte des Schrägförderers abgegeben wird. Ein beträchtlicher Teil wird bezüglich der Vorwärtsrichtung des Erntevorsatzes 24 weiter links und rechts der Mitte abgegeben, so dass der Mähdrescher etwa gleichmäßig beschickt wird. Die Endscheibe 14 verhindert außerdem Pflanzenwickler an den Enden der Windungen 16, 18.

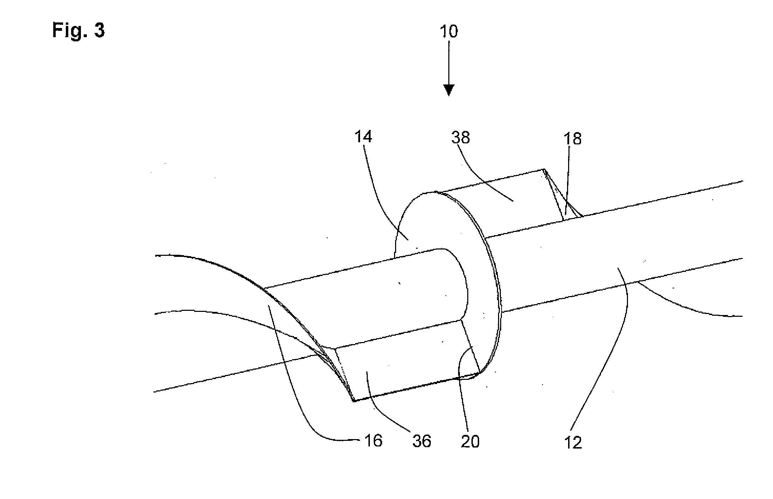

In der Figur 3 ist eine zweite Ausführungsform einer erfindungsgemäßen Querförderschnecke 10 dargestellt, die ebenfalls im Erntevorsatz 24 aus Figur 2 verwendbar ist. Mit der ersten Ausführungsform übereinstimmende Elemente sind mit denselben Bezugszeichen dargestellt. Die Querförderschnecke 10 nach Figur 3 unterscheidet sich von der Ausführungsform nach Figur 1 im Wesentlichen dadurch, dass die Windungen 16, 18 im Abstand von der Endscheibe 14 enden und dort in Bereiche 36, 38 übergehen, die sich axial und radial zum Körper 12 erstrecken. Diese Bereiche 36, 38 reduzieren die Bewegung des Ernteguts zur Mitte der Maschine hin und unterstützen die Bewegung nach hinten in die Erntemaschine. Die Bereiche 36, 38 könnten auch Windungen sein, die jedoch eine größere Steigung und/oder eine geringere Höhe über dem Körper 12 als die äußeren Windungen 16, 18 aufweisen.

## Patentansprüche

1. Querförderschnecke (10) für einen Erntevorsatz (24), mit einem Körper (12), um den Körper (12) angeordneten, spiralförmigen Windungen (16, 18), die jeweils von einer Außenseite des Körpers (12) in Richtung auf seine Mitte zu verlaufen und einer sich stromab der Windungen (16, 18) etwa senkrecht zur Längsachse des Körpers (12) erstreckendenden Endscheibe (14), **dadurch gekennzeichnet, dass** nur eine einzige, in der Mitte des Körpers (12) angeordnete Endscheibe (14) vorhanden ist.

2. Querförderschnecke (10) nach Anspruch 1, **dadurch gekennzeichnet, dass** die Endscheibe (14) sich mittig vor einem Einzugskanal einer Erntemaschine befindet.

3. Querförderschnecke (10) nach Anspruch 1 oder 2, **dadurch gekennzeichnet, dass** die Windungen (16, 18) jeweils in einer sich etwa radial zum Körper (12) erstreckenden Kante (20) an die Endscheibe (14) anschließen.

4. Querförderschnecke (10) nach einem der Ansprüche 1 bis 3, **dadurch gekennzeichnet, dass** die Windungen (16, 18) an ihren der Mitte der Querförderschnecke (10) benachbarten Enden in sich axial zum Körper (12) erstreckende Bereiche (36, 38) übergehen.

5. Querförderschnecke (10) nach einem der Ansprüche 1 bis 4, **dadurch gekennzeichnet, dass** äußere Durchmesser der Windungen (16, 18) zumindest etwa mit dem äußeren Durchmesser der Endscheibe (14) übereinstimmt.

6. Erntevorsatz (24), insbesondere Maispflücker, Maisgebiss, Schneidwerk oder Pick-Up mit einer Querförderschnecke (10) nach einem der Ansprüche 1 bis 5.
